# EUROPEAN PATENT SPECIFICATION

(11) **EP 2 573 641 B1**
(45) Date of publication and mention of the grant of the patent: **16.01.2019**
(21) Application number: 10851603.0
(22) Date of filing: 06.08.2010
(51) Int. Cl.: G05D 23/02, C09K 5/04, G01K 11/04, G01K 5/08, G05D 23/12

(54) **TEMPERATURE SENSING LIQUID MEDIUM OF LIQUID-FILLED TEMPERATURE CONTROL DEVICE OF HEAT PRODUCING APPARATUS AND TEMPERATURE CONTROL DEVICE**
TEMPERATURMESSENDES FLÜSSIGMEDIUM EINER FLÜSSIGKEITSGEFÜLLTEN TEMPERATURSTEUERUNGSVORRICHTUNG EINES WÄRMEERZEUGUNGSGERÄTS UND TEMPERATURSTEUERUNGSVORRICHTUNG
MILIEU LIQUIDE SENSIBLE À LA TEMPÉRATURE POUR DISPOSITIF DE COMMANDE DE LA TEMPÉRATURE REMPLI DE LIQUIDE D'UN APPAREIL DE PRODUCTION DE CHALEUR, ET DISPOSITIF DE COMMANDE DE LA TEMPÉRATURE

(30) Priority: 19.05.2010 CN 201010179327
(43) Date of publication of application: 27.03.2013
(73) Proprietor: Wang, Chansong, Foshan, Guangdong 528500 (CN); Ao, Chiman, Guangdong 528500 (CN)
(72) Inventor: Wang, Chansong, Foshan, Guangdong 528500 (CN); Ao, Chiman, Guangdong 528500 (CN)
(74) Representative: Intès, Didier Gérard André
(86) International application number: PCT/CN2010/075755
(87) International publication number: WO 2011/143845

(56) References cited:
- EP-A2- 0 350 084
- WO-A1-02/095343
- CN-A- 101 137 279
- CN-U- 2 114 084
- CN-Y- 200 982 892
- CN-Y- 201 107 675
- US-A- 3 163 045
- US-A- 3 163 045
- US-A- 3 283 099
- US-A- 4 540 860

## Description

### Field of the Invention

The present invention relates to a temperature control device, in particular relates to a liquid-filled temperature control device of heat producing apparatus, which fall within the technical field of manufacturing temperature control device.

### Background of the prior art

To reach the interdependence between the temperature sensing part and the switching part at different positions over comparatively long distance, some household electrical appliances need to use liquid-filled temperature control device. Such device comprises temperature sensing part, power part and switching part. Generally, capillary is used as the temperature sensing part to be communicated with the power part, and temperature sensing liquid medium as Freon or oil or fat is infused in the capillary and the power part, so that the liquid-gas phase transformation of Freon or the thermal expansion of oil liquid will drive the switching part of temperature control device to operate.

When low temperature cooling medium such as Freon is used as the medium, the cooling medium is infused in an enclosed space of temperature sensing and power parts. Under certain temperature and pressure, the cooling medium on the position at the lowest temperature of temperature control device is in the liquid condensed state. When the temperature rises, the liquid-gas phase transformation of cooling medium occurs, the gasification quantity increases, so that the volume of cooling medium increases and thus the cooling medium pushes the power part to expand and drives the switching part to operate. However, since the position of this device at non-lowest temperature has been in gasified state, the change of temperature will unlikely result in obvious change in the gasification quantity of cooling medium. Therefore, such type of temperature control device must use the position with the lowest temperature as the temperature control point. Generally, such temperature control device is used on the cooling apparatuses such as refrigerator, air conditioner and cooling-water machine. When the temperature control device using low temperature cooling medium is used in heat producing apparatuses (such as fan warmer and counter flow warmer) for temperature control, it is also necessary to install and fix the capillary part nearby the air inlet of warmer (namely, the relative low-temperature area of sensed room temperature); the switch body is installed on the relative high-temperature zone at the upper art of the heat producing part, so as to control the operation of the temperature control device by using the cooling medium in the low-temperature area to sense the changes of room temperature.

When oils and other liquids are used as the temperature sensing medium for the temperature control device of heat producing apparatus, the principle of the expansion and contraction of liquid is used to transmit the volume change with temperature of liquid in the sensing bulb to the power part through capillary, thus driving the switching part of the temperature control device to make on-off action. In order to reach the required sensitivity of temperature control, it is necessary to make the liquid to generate adequate volume change. Therefore, thermo bulb with bigger volume is needed to infuse more temperature sensing medium.

The operation mode of said two types of temperature sensing liquid medium has the following problem: The cooling medium such as Freon is merely applicable within relatively low temperature range, such as below 40°C. When it is used as the temperature control device for heat producing apparatus, such medium may only be used as the temperature regulation control for the lowest temperature area. When it is required to conduct temperature control for high temperature area, especially when overtemperature protection control is needed, such cooling medium is not applicable. In the use of Freon medium, medium leakage in the sections of production and use may also cause the problem of environmental pollution. When oils are used as temperature sensing medium, there are also such problems as big volume of liquid temperature sensing part and small temperature sensing control area.

In addition, when said two kinds of medium are adopted, the change of medium state with temperature is a gradual change process, while the expansion of the power part of the temperature control device is also a gradual change process. Therefore, the power part is generally designed as peristaltic diaphragm chamber or corrugated structure. However, the switching part generally adopts quick flip type energy storage reed, so that the switch contact may make instantaneous action. The problem in such coordination mode is that, when the quick flip type energy storage reed has lost quick flip effect due to elastic fatigue, the power part cannot effectively drive the on-off of switch contact, leading to failure in temperature control or temperature limit and affecting the safety in use and the safety of equipment.
US 3163045 discloses a thermally responsive power means.

### Summary of the Invention

It is the technical objective of the present invention to provide a liquid - filled temperature control device of the heat producing apparatus, so as to overcome the technical problems in the prior art. A special mixed solution is used as the temperature sensing medium for the temperature sensing part of the liquid - filled temperature control device. In the mode where the bubble point temperature (phase transition temperature) of the specific mixed solution is matching with the required operating temperature, the present invention solves such problem that the Freon cooling medium and the liquid medium are not suitable for being used as the temperature sensing medium for the temperature control or overtemperature protection for the high temperature area of heat producing apparatus. Furthermore, the power part cooperates with the switching part in such a manner that a snap-type diaphragm combines with a quick flip spring leaf. So as to solve the safety problem of electric apparatus caused by the malfunction of the snap-type diagram or the quick flip spring leaf.

The technical objective of the present invention is realized through the following technical solution:
The present invention is defined by claim 1 and provides a liquid - filled temperature control device of heating producing apparatus, comprising a temperature sensing part, a power part and a switching part, wherein the temperature sensing part is a capillary, one end of the capillary is sealed, and another end of the capillary is connected with the power part; the temperature sensing liquid medium is infused in the enclosed space composed of the capillary and the power part;

The temperature sensing liquid medium is a mixed solution, composed of water, ethanol and glycol or two of these three components;
or, the temperature sensing liquid medium composed of water, methanol and glycol or two of these three components;
the power part is a disk-type shell enclosed by a close cover and an elastic diaphragm, wherein the top of the close cover is communicated with the capillary ; the enclosed space is formed by the disk-type shell and the inside of the capillary;
the switching part comprises a base, a push rod guide disc is set at the top of the base, a push rod, which can move up and down freely in the through hole, is set in the through hole in the middle of the push rod guide disc; the elastic diaphragm of the power part is set on the upper end of the push rod guide disc and corresponds to the upper terminal of the push rod;
the switching part also comprises a spring leaf, electric contactors, an connecting terminal, wherein the connecting terminal is set on the base, one end of the spring leaf is fixed on the bracket of the first terminal, the another end of the spring leaf is a cantilevered end, a fixed contactor is set on the terminal of the cantilevered end and is opposite to a moving contactor which is set on the second terminal; lower terminal of the push rod is supported on the spring leaf .

Based on the principle that the gasification of specific mixed solution may occur at certain temperature, the present invention overcome such problem that the Freon cooling medium and liquid medium are not suitable for being used as the temperature sensing medium for temperature control or overtemperature protection for the high temperature area of heat producing apparatus. The power part cooperates with the switching part in such a manner that a snap-type diaphragm combines with a quick flip spring leaf, so as solve the safety problem in electric appliance which is caused by the malfunction of the snap-type diaphragm and the quick flip spring leaf.

The present invention is further described in detail with reference to the attached drawings and the embodiments.

### Description of attached drawings

Fig 1 is the integral structure diagram of the liquid - filled temperature control device of the present invention;
Fig 2 is the top view of the liquid - filled temperature control device of the present invention;
Fig 3 is the sectional view of Fig 2 along A - A direction in which the gasification and expansion state does not occur;
Fig 4 is the top view of the base part as shown in Fig 3;
Fig 5 is the sectional view of Fig 2 along A - A direction in which the gasification and expansion state has occurred;

### Detailed Description of Preferred Embodiments

The mixed solution used by the present invention in the liquid - filled temperature control device is mainly composed of such components as pure water, ethylene glycol, ethanol (or methanol). Less than one atmosphere, the boiling point of water is 100°C, the boiling point of ethylene glycol is 197.5°C, the boiling point of ethanol is 78°C, and the boiling point of methanol is 64.5°C. When said solvents are mixed together in different proportions, there will be changes in the bubble point temperature (or phase transition temperature) of mixed solution. According to the need for temperature control, the proportion of mixture can be adjusted so that its bubble point temperature corresponds to the temperature control point. In the process of application, the mixed solution is filled in an enclosed space. When the temperature sensed by the temperature sensing part reaches the required temperature control point or temperature limit point, the mixed solvent acting as the temperature sensing medium will become gasified, so that the enclosed space filled with the mixed solution medium expands, the diaphragm of the power part which is communicated with it to form an enclosed space to act; the diaphragm of the power part drives the switching part, so that a pair of electric contactors of the switching part are disconnected. Ethanol, ethylene glycol and other ingredients as well as anti- freezing role. In order to get temperature control point of temperature control device, there are many mix mode of mixed solution. Embodiments as following:
Embodiment 1: When the temperature control point of the temperature control device is required to be 120°C - 140°C, the mixed solution with the volume proportion (water 0% - 20%, ethanol 0% - 10% and ethylene glycol 80% - 95%) is used as the temperature sensing medium of the temperature sensing part.
Embodiment 2: When the temperature control point of the temperature control device is required to be 140°C, the mixed solution with the volume proportion (ethanol 5% and ethylene glycol 95%) is used as the temperature sensing medium of the temperature sensing part.
Embodiment 3: When the temperature control point of the temperature control device is required to be 80°C - 95 °C, the mixed solution with volume proportion (water 10% - 30%, ethanol 65% - 85% and ethylene glycol 2% - 8%) is used as the temperature sensing medium of the temperature sensing part.
Embodiment 4: When the temperature control point of the temperature control device is required to be 82°C, the mixed solution with the volume proportion (water 18%, ethanol 80% and ethylene glycol 2%) is used as the temperature sensing medium of the temperature sensing part.
Embodiment 5: When the temperature control point of the temperature control device is required to be 65°C - 85°C, mixed solution with volume proportion (water 5% - 25%, methanol 75% -90% and ethylene glycol 2% -5%) is used as the temperature sensing medium of the temperature sensing part.

When the temperature controller is applied in the convection warmer, to prevent the temperature of the mesh enclosure at the air inlet from causing scalding to human being, the inductive control temperature of the capillary is generally set as 80°C - 150°C according to the specification of the complete appliance as well as the fixed position of the capillary in the complete appliance. If the adopted operation temperature is 82°C, the mixed solution in said embodiment 4 can be used as the temperature sensing medium of the liquid - filled temperature control device.

According to different needs for the temperature of the temperature control point, said mixed solution can also be prepared in various proportions of ingredients. In particular, since the boiling temperature of ethanol is approximate to that of methanol, methanol can be used to substitute ethanol in many cases.

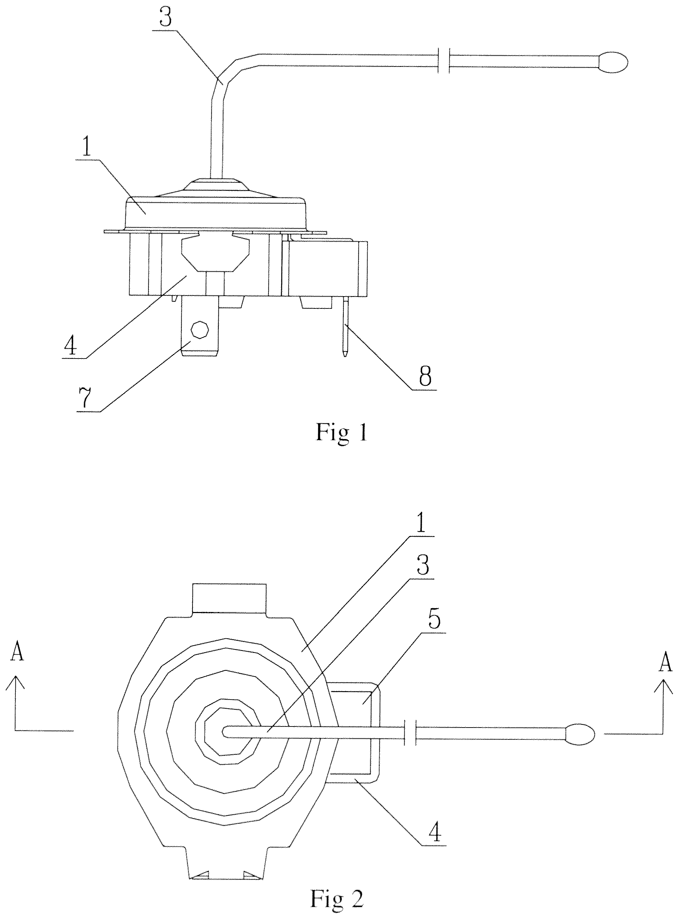

Fig 1 is the integral structure diagram of the liquid - filled temperature control device of the present invention; Fig 2 is the top view of the liquid - filled temperature control device of the present invention. As shown in Fig 1 in combination with Fig 2, the temperature sensing part of the temperature control device is a capillary 3. The capillary 3 is connected with a sealing cover 1 of the power part, the sealing cover 1 is covered on a base 4 of the switching part, with its periphery being tightly riveted. A first terminal 7 and a second terminal 8 are set below the base 4.

According to the need for the temperature sensing of matching heat producing apparatus and for the arrangement of temperature control area, the capillary 3 is designed to have length of 0.5 - 2 meter and outside diameter of 1.5 - 2.5mm, which is made of copper tube or stainless steel tube or metal capillary. For example, for an elongated convection type electric warmer in length of more than 1 meter, an air inlet is set at its bottom surface while a hot-blast outlet is set on the upper side. To prevent the whole air outlet or any section of it from being covered or being excessively heated due to abnormal voltage, the capillary 3 is arranged between the heating part and the upper air outlet. When the temperature sensing on any position of the warmer along the length of capillary exceeds the limit, the temperature sensing solution will be gasified and expanded, thus causing the switching part of the temperature control device to operate and realize the objective of temperature control (or the objective of overheating protection for the heat producing apparatus). Since the position with the highest temperature is used as the temperature sensing point for temperature control, it is applicable to the temperature limit and temperature control for the electric heating device, so that the whole area where the capillary is located is also provided with temperature control or overtemperature protection.

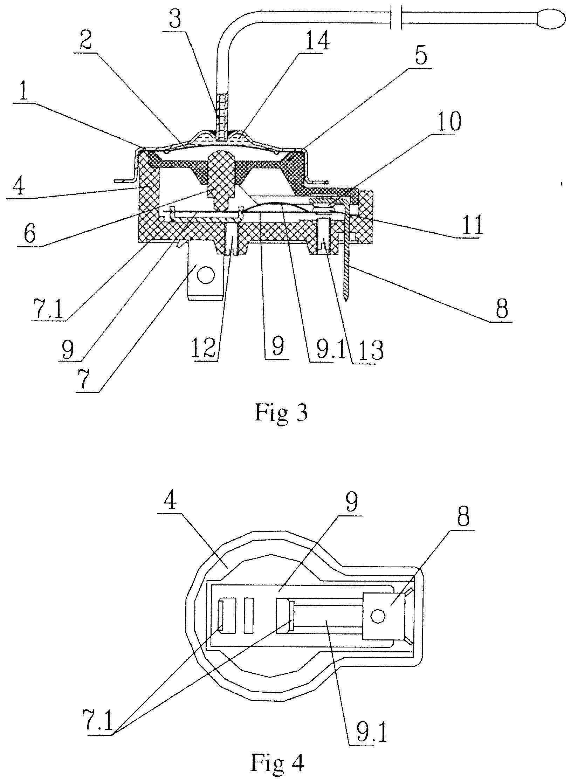

Fig 3 is the sectional view of Fig 2 along A - A direction in which the gasification and expansion state does not occur; Fig 4 is the top view of the base part as shown in Fig 3. As shown in Fig 3, the middle part of the sealing cover I is discoid. The sealing cover 1 and the periphery of the elastic membrane 2 are welded into an enclosed hollow disk type shell. The through hole set at the top of the sealing cover I is communicated with the capillary 3, and another end of the capillary 3 is sealed. The enclosed space composed of the disk type shell and the capillary is filled with the mixed solution 14. The elastic diaphragm 2 is snap-type. When the temperature rises but has not reached the operating temperature, its shape moves upwards and recesses into the sealing cover 1 (as shown in Fig 3). When the temperature has reached the operating temperature, the mixed solution is gasified. At the moment of expansion due to gasification, the elastic diaphragm bulges aginst the sealing cover 1. Upon temperature reduction and elimination of gasification, it is recovered to recess state. The sealing cover 1 can be made of stainless steel material in thickness of 0.5mm, while the elastic diaphragm 2 is made of elastic stainless steel material in thickness of 0.12mm.

The power part of the fluid filled temperature control apparatus is a snap - type diaphragm, which can be used in coordination with slowing-moving switch spring leaf. However, such coordination mode has such problem that, in case of fatigue or malfunction of the snap - type diaphragm due to long-term repeated motion or poor manufacturing quality, the snap - type diaphragm is unable to timely push the slow-moving spring leaf and thus allow the electric contactors to be disengaged to the pre-set safe position, arcing/ electric arc will occur between electric contactors and electromagnetic noise to electric network will be generated. Therefore, quick flip energy storage spring leaf structure is advisable.

As shown in Fig 4 in combination with Fig 3, a push rod guide disc 5 is set at the top of the base 4; a push rod 6, which can move up and down freely in the through hole, is set in the through hole in the middle of the push rod guide disc5; the upper end of the push rod 6 corresponds to elastic diaphragm 2; the lower end of the push rod 6 is supported on the spring leaf 9. The base 4, the push rod guide disc 5 and the push rod 6 are made of insulating materials such as Bakelite and plastic.

A first terminal 7 and a second terminal 8 are set below the base 4. A U-shaped bracket is formed at the upper part of the first terminal 7. One end of the spring leaf 9 is fixed in the slot on one side of the U-shaped bracket 7.1 of the first terminal 7, and the middle tongue bending 9.1 of the spring leaf 9 is supported in the slot on the another side of the U-shaped bracket 7.1 of the first terminal 7, so that a cantilever is formed. A moving contactor 11 is set on its cantilevered end and is opposite to the fixed contactor 10 set on the second terminal. Both ends can be made of copper material. The spring leaf 9 can be made of beryllium copper material in thickness of 0.15mm. The electric contactors are made of copper matrix, and its contact surface is made of a composite silver layer. The middle tongue of spring leaf 9 adopts energy storage arc-like bending. When the body of the spring leaf 9 is pressed down by the push rod 6 and move across the slot pivot of U-shaped bracket of between the arc-like tongue and the first terminal 7, the spring leaf 9 will quickly moves across the center point under the action of elastic force. Therefore, it is called as quick-flip spring leaf. The quick-flip spring leaf differs from the slow-moving spring leaf in that, the slow-moving spring leaf only has spring piece with pre-deformation but has no arc-like tongue. The pre-deformation provides the electric contactors with contact pressure, so that the spring leaf only moves with the push from external force and thus itself unlikely has operation of sudden reverse. The quick-flip spring leaf can drive the moving electric contactor to make quick make-and-break, so that it can effectively reduce such problems as arc erosion and EMI and improve the contact endurance. When the snap type diaphragm turns into creepage or fails to jump in place due to disappearance of internal stress after long-term repeated action or poor manufacturing quality, the instantaneous action of the quick-flip spring leaf can be used to enable the electric contactors to be quickly disengaged and move to safe position.

A contactor clearance adjusting screw 13 is set at the base 4 on the lower part of the moving contactor 11. This adjusting screw is used to adjust the spacing distance between the moving contactor 11 and the fixed contactor 10 after disconnection, so that this distance reaches the safe range for the electric apparatus.

A pivot adjusting screw 12 is set at the bottom surface on the U-shaped bracket 7.1 of first terminal 7 nearby the tongue pivot. This adjusting screw 12 is used to push the slot on the bracket (namely the pivot position of spring Leaf) to make up and down movement in minute quantities, so that the spring leaf 9 is below the contactor clearance in the action center composed of the spring leaf and the pivot, namely the spring leaf is at the critical position for action. When the push rod 6 has not acted on the spring leaf 9, the electric contactors are kept in switched on position, and the spring leaf is made to reverse in the concave-convex travel of the elastic diaphragm 2. so that the quick-flip spring leaf 9 can realize quick make-and-break of a pair of electric contactors.

The operating process of the liquid - filled temperature control device in the present invention is briefly described below:
Fig 3 shows the state where the temperature sensing medium in the enclosed space composed of disk type shell and capillary has not gasified and expanded. At this moment, the quick-flip elastic diaphragm 2 is in the recess state in relative to the sealing cover and is not contacted with the upper end of the push rod 6, the fixed contactor 10 is in contact with the moving contactor 11, and the temperature control device is in on-state.

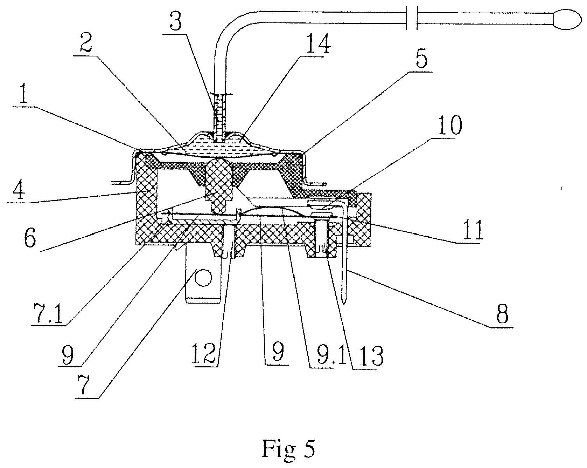

Fig 5 shows the state where the temperature sensing medium in the enclosed space composed of disk type shell and capillary has been gasified and expanded. When partial temperature sensing medium in the enclosed space formed by the disk type shell and the capillary is gasified and expanded at preset temperature, the snap-type elastic diaphragm 2 will instantaneously turn from recess state to projecting state and thus push the push rod 6 to move downwards, and then the push rod 6 pushes the spring leaf 9 to move downwards. Since the snap-type spring leaf is used, when the body of the spring leaf 9 moves down and gets across the pivot of the tongue, it will make instantaneous reversal under the elastic force of the arc-like tongue, so that the fixed contactor 10 and the moving contactor 11 are quickly disengaged, and the temperature control apparatus is in the off state.

With the power-off of the matching electric heater, the temperature of the heat producing apparatus will fall, the medium of mixed solution will return to liquefied state and thus reduces in volume; the elastic diaphragm 2 will automatically recover to the recess state, the push force applied by the push rod 6 on the spring leaf 9 will be released; the spring leaf 9 will be quickly rebounded under the driving force of the arc-like tongue, so that two electric contactors return to contact state, and thus the heating body is once again switched on and starts heating.

The present invention adopts a mixed solution being composed of wide range of solvents and water. The solution components can be adjusted according to the temperature of different temperature control points if necessary, so that the mixed solution has wide scope of application. Furthermore, the coordination between the power part and the switching part can guarantee the safety of electric apparatus.

Finally, it must be mentioned that said embodiments are merely used to describe rather than limit the present invention.

## Claims

1. A liquid - filled temperature control device of heating producing apparatus, comprising a temperature sensing part, a power part and a switching part, wherein the temperature sensing part is a capillary (3), one end of the capillary (3) is sealed, and another end of the capillary is connected with the power part, **characterized in that**, an enclosed space formed by the capillary (3) and a cavity of the power part is filled with temperature sensing liquid medium;
the temperature sensing liquid medium is a mixed solution composed of water, ethanol and ethylene glycol or two of these three components;
or, the temperature sensing liquid medium is a mixed solution composed of water, methanol and ethylene glycol or two of these three components;
the power part is a disk-type shell enclosed by a close cover (1) and an elastic diaphragm (2), wherein the top of the close cover (1) is communicated with the capillary (3); the enclosed space is formed by the disk-type shell and the inside of the capillary (3);
the switching part comprises a base (4), a push rod guide disc (5) having a through hole is set at the top of the base (4), a push rod (6), which can move up and down freely in the through hole, is set in the through hole in the middle of the push rod guide disc (5); the elastic diaphragm (2) of the power part is set on the upper end of the push rod guide disc (5) and corresponds to the upper end of the push rod (6);
the switching part also comprises a spring leaf (9), electric contactors, and terminals, one end of the spring leaf (9) is fixed on one side of a U-shaped bracket (7.1) of a first terminal (7), a middle part of spring leaf (9) is fixed on the other side of the U-shaped bracket (7.1) of the first terminal (7), the other end of the spring leaf (9) is a cantilevered end, a moving contactor (11) is set on the cantilevered end of the spring leaf (9) and is opposite to a fixed contactor (10) which is set on a second terminal (8); a lower end of the push rod (6) is supported on the part of the spring leaf (9) that is located between the two sides of the U-shaped bracket (7.1),
upon the action of the push rod (6) on the part of the spring leaf (9) that is located between the two sides of the U-shaped bracket (7.1), the moving contactor (11) on the cantilevered end of the spring leaf (9) is engaged or disengaged with the fixed contactor (10) by the elastic force of the spring leaf (9).

2. The liquid - filled temperature control device of heat producing apparatus of claim 1, **characterized in that**, volume proportion of the mixed solution is as follows: water 0% - 20%, ethanol 0% - 10% and ethylene glycol 80% - 95%.

3. The liquid - filled temperature control device of heat producing apparatus of claim 2, **characterized in that**, the volume proportion of the mixed solution is as follows: ethanol 5% and ethylene glycol 95%.

4. The liquid - filled temperature control device of heat producing apparatus of claim 1, **characterized in that**, volume proportion of the mixed solution is as follows: water 10% - 30%, ethanol 65% - 85% and ethylene glycol 2% - 8%.

5. The liquid - filled temperature control device of heat producing apparatus of claim 4, **characterized in that**, the volume proportion of the mixed solution is as follows: water 18%, ethanol 80% and ethylene glycol 2%.

6. The liquid - filled temperature control device of heat producing apparatus of claim 1, **characterized in that**, volume proportion of the mixed solution is as follows: water 5% - 25%, methanol 70% - 90% and ethylene glycol 2% - 8%.

7. The liquid - filled temperature control device of heat producing apparatus of claim 1, **characterized in that**, the capillary (3) is a metal tube with external diameter of 1.5 - 2.5mm;
the elastic diaphragm (2) is a snap-type diaphragm, which is in the shape of concave arc under free state and suddenly become convex arc when its surface is subject to gasified expansion pressure.

8. The liquid - filled temperature control device of heating producing apparatus of claim 1, **characterized in that**, an arc-shaped tongue piece (9.1) is set on the spring leaf (9), one end of the arc-shaped tongue piece (9.1) is connected with the cantilevered end of the spring leaf (9), and the other end of the arc-shaped tongue piece is supported in a groove at the other side of the U-shaped bracket (7.1) of the first terminal (7).

9. The liquid - filled temperature control device of heat producing apparatus of claim 8, **characterized in that**, a bracket adjusting screw (12) is set at the bottom surface of the U-shaped bracket (7.1) of the first terminal (7).

## Patentansprüche

1. Flüssigkeitsgefüllte Temperatursteuerungsvorrichtung eines Wärmeerzeugungsgeräts, umfassend einen Temperaturmessteil, einen Leistungsteil und einen Schaltteil, wobei der Temperaturmessteil ein Kapillarrohr (3) ist, eine Ende des Kapillarrohrs (3) versiegelt ist, und das andere Ende des Kapillarrohrs mit dem Leistungsteil verbunden ist, **dadurch gekennzeichnet, dass** ein umschlossener Raum, der durch das Kapillarrohr (3) und einen Hohlraum des Leistungsteils gebildet wird, mit temperaturmessendem Flüssigmedium gefüllt ist;
wobei das temperaturmessende Flüssigmedium eine gemischte Lösung ist, die aus Wasser, Ethanol und Ethylenglycol oder zweien dieser drei Komponenten besteht;
oder das temperaturmessende Flüssigmedium eine gemischte Lösung ist, die aus Wasser, Methanol und Ethylenglycol oder zweien dieser drei Komponenten besteht;
der Leistungsteil ein scheibenförmiges Gehäuse ist, das durch einen Verschlussdeckel (1) und eine elastische Membran (2) geschlossen ist, wobei der obere Teil des Verschlussdeckels (1) mit dem Kapillarrohr (3) in Verbindung steht; und der geschlossene Raum durch das scheibenförmige Gehäuse und die Innenseite des Kapillarrohrs (3) gebildet wird;
der Schaltteil eine Basis (4), eine Stoßstangenführungsscheibe (5) mit einem Durchgangsloch am oberen Teil der Basis (4) eingerichtet ist, eine Stoßstange (6), die sich im Durchgangsloch frei auf- und abwärts bewegen kann, im Durchgangsloch in der Mitte der Stoßstangenführungsscheibe (5) eingerichtet ist; und die elastische Membran (2) des Leistungsteils am oberen Teil der Stoßstangenführungsscheibe (5) eingerichtet ist und dem oberen Ende der Stoßstange (6) entspricht;
der Schaltteil außerdem ein Federblatt (9), elektrische Kontaktgeber und Anschlüsse umfasst, ein Ende des Federblatts (9) auf einer Seite einer U-förmigen Klammer (7.1) eines ersten Anschlusses (7) fixiert ist, ein mittlerer Teil des Federblatts (9) auf der anderen Seite der U-förmigen Klammer (7.1) des ersten Anschlusses (7) fixiert ist, das andere Ende des Federblatts (9) ein ausladendes Ende ist, ein beweglicher Kontaktgeber (11) am ausladenden Ende des Federblatts (9) eingerichtet und gegenüber einem unbeweglichen Kontaktgeber (10) fixiert ist, der auf einem zweiten Anschluss (8) eingerichtet ist; und ein unteres Ende der Stoßstange (6) auf dem Teil des Federblatts (9) getragen wird, der sich zwischen den beiden Seiten der U-förmigen Klammer (7.1) befindet;
der bewegliche Kontaktgeber (11) am ausladenden Ende des Federblatts (9) bei Betätigung der Stoßstange (6) auf dem Teil des Federblatts (9), der sich zwischen den beiden Seiten der U-förmigen Klammer (7.1) befindet, durch die elastische Kraft des Federblatts (9) mit dem unbeweglichen Kontaktgeber (10) in Eingriff gebracht oder davon getrennt wird.

2. Flüssigkeitsgefüllte Temperatursteuerungsvorrichtung eines Wärmeerzeugungsgeräts nach Anspruch 1, **dadurch gekennzeichnet, dass** der Volumenanteil der gemischten Lösung ist, wie folgt: Wasser 0 % bis 20 %, Ethanol 0 % bis 10 % und Ethylenglycol 80 % bis 95 %.

3. Flüssigkeitsgefüllte Temperatursteuerungsvorrichtung eines Wärmeerzeugungsgeräts nach Anspruch 2, **dadurch gekennzeichnet, dass** der Volumenanteil der gemischten Lösung ist, wie folgt: Ethanol 5 % und Ethylenglycol 95 %.

4. Flüssigkeitsgefüllte Temperatursteuerungsvorrichtung eines Wärmeerzeugungsgeräts nach Anspruch 1, **dadurch gekennzeichnet, dass** der Volumenanteil der gemischten Lösung ist, wie folgt: Wasser 10 % bis 30 %, Ethanol 65 % bis 85 % und Ethylenglycol 2 % bis 8 %.

5. Flüssigkeitsgefüllte Temperatursteuerungsvorrichtung eines Wärmeerzeugungsgeräts nach Anspruch 4, **dadurch gekennzeichnet, dass** der Volumenanteil der gemischten Lösung ist, wie folgt: Wasser 18 %, Ethanol 80 % und Ethylenglycol 2 %.

6. Flüssigkeitsgefüllte Temperatursteuerungsvorrichtung eines Wärmeerzeugungsgeräts nach Anspruch 1, **dadurch gekennzeichnet, dass** der Volumenanteil der gemischten Lösung ist, wie folgt: Wasser 5 % bis 25 %, Methanol 70 % bis 90 % und Ethylenglycol 2 % bis 8 %.

7. Flüssigkeitsgefüllte Temperatursteuerungsvorrichtung eines Wärmeerzeugungsgeräts nach Anspruch 1, **dadurch gekennzeichnet, dass** das Kapillarrohr (3) ein Metallrohr mit einem Außendurchmesser von 1,5 bis 2,5 mm ist;
die elastische Membran (2) eine Schnappmembran ist, die im freien Zustand die Form eines konkaven Bogens aufweist und plötzlich ein konvexer Bogen wird, wenn ihre Oberfläche Gasexpansionsdruck ausgesetzt wird.

8. Flüssigkeitsgefüllte Temperatursteuerungsvorrichtung eines Wärmeerzeugungsgeräts nach Anspruch 1, **dadurch gekennzeichnet, dass** ein bogenförmiges Zungenstück (9.1) auf der Blattfeder (9) eingerichtet ist, wobei ein Ende des bogenförmigen Zungenstücks (9.1) mit dem ausladenden Ende der Blattfeder (9) verbunden ist, und das andere Ende des bogenförmigen Zungenstücks in einer Nut auf der anderen Seite der U-förmigen Klammer (7.1) des ersten Anschlusses (7) getragen wird.

9. Flüssigkeitsgefüllte Temperatursteuerungsvorrichtung eines Wärmeerzeugungsgeräts nach Anspruch 8, **dadurch gekennzeichnet, dass** eine Klammer-Justierschraube (12) auf der Unterseite der U-förmigen Klammer (7.1) des ersten Anschlusses (7) eingerichtet ist.

## Revendications

1. Dispositif de commande de température rempli de liquide d'un appareil de production de chaleur, comprenant une partie détection de température, une partie alimentation et une partie commutation, dans lequel la partie détection de température est un capillaire (3), une extrémité du capillaire (3) est scellée, et une autre extrémité du capillaire est reliée à la partie alimentation, **caractérisé en ce qu'**un espace clos formé par le capillaire (3) et une cavité de la partie alimentation est remplie d'un milieu liquide de détection de température ;
le milieu liquide de détection de température est une solution mixte composée d'eau, d'éthanol et d'éthylène glycol ou de deux de ces trois composants ;
ou le milieu liquide de détection de température est une solution mixte composée d'eau, de méthanol et d'éthylène glycol ou de deux de ces trois composants ;
la partie alimentation est une enveloppe de type disque protégée par un capot de fermeture (1) et une membrane élastique (2), la partie supérieure du capot de fermeture (1) communiquant avec le capillaire (3) ; l'espace clos est formé par l'enveloppe de type disque et la partie intérieure du capillaire (3) ;
la partie commutation comprend un socle (4), un disque de guidage à tige de poussée (5) doté d'un trou traversant est installé dans la partie supérieure du socle (4), une tige de poussée (6), qui peut monter et descendre librement dans le trou traversant, est installée dans le trou traversant au milieu du disque de guidage à tige de poussée (5) ; la membrane élastique (2) de la partie alimentation est installée sur l'extrémité supérieure du disque de guidage à tige de poussée (5) et correspond à l'extrémité supérieure de la tige de poussée (6) ;
la partie commutation comprend également une lame de ressort (9), des contacteurs électriques et des bornes, une extrémité de la lame de ressort (9) est fixée sur un côté d'un étrier en U (7.1) d'une première borne (7), une partie médiane de la lame de ressort (9) est fixée sur l'autre côté de l'étrier en U (7.1) de la première borne (7), l'autre extrémité de la lame de ressort (9) est une extrémité en porte-à-faux, un contacteur mobile (11) est installé sur l'extrémité en porte-à-faux de la lame de ressort (9) et est opposé à un contacteur fixe (10) qui est installé sur une seconde borne (8) ; une extrémité inférieure de la tige de poussée (6) est en appui sur la partie de la lame de ressort (9) qui se trouve entre les deux côtés de l'étrier en U (7.1),
sous l'action de la tige de poussée (6) sur la partie de la lame de ressort (9) qui se trouve entre les deux côtés de l'étrier en U (7.1), le contacteur mobile (11) situé sur l'extrémité en porte-à-faux de la lame de ressort (9) est mis en prise avec le contacteur fixe (10) ou séparé de celui-ci par la force élastique de la lame de ressort (9).

2. Dispositif de commande de température rempli de liquide d'un appareil de production de chaleur selon la revendication 1, **caractérisé en ce que** la proportion en volume de la solution mixte est la suivante : eau 0 % à 20 %, éthanol 0 % à 10 % et éthylène glycol 80 % à 95 %.

3. Dispositif de commande de température rempli de liquide d'un appareil de production de chaleur selon la revendication 2, **caractérisé en ce que** la proportion en volume de la solution mixte est la suivante : éthanol 5 % et éthylène glycol 95 %.

4. Dispositif de commande de température rempli de liquide d'un appareil de production de chaleur selon la revendication 1, **caractérisé en ce que** la proportion en volume de la solution mixte est la suivante : eau 10 % à 30 %, éthanol 65 % à 85 % et éthylène glycol 2 % à 8 %.

5. Dispositif de commande de température rempli de liquide d'un appareil de production de chaleur selon la revendication 4, **caractérisé en ce que** la proportion en volume de la solution mixte est la suivante : eau 18 %, éthanol 80 % et éthylène glycol 2 %.

6. Dispositif de commande de température rempli de liquide d'un appareil de production de chaleur selon la revendication 1, **caractérisé en ce que** la proportion en volume de la solution mixte est la suivante : eau 5 % à 25 %, méthanol 70 % à 90 % et éthylène glycol 2 % à 8 %.

7. Dispositif de commande de température rempli de liquide d'un appareil de production de chaleur selon la revendication 1, **caractérisé en ce que** le capillaire (3) est un tube métallique ayant un diamètre externe de 1,5 à 2,5 mm ;
la membrane élastique (2) est une membrane du type à action brusque, qui se présente sous la forme d'un arc concave à l'état libre et qui se transforme subitement en arc convexe lorsque sa surface est soumise à une pression de dilatation gazéifiée.

8. Dispositif de commande de température rempli de liquide d'un appareil de production de chaleur selon la revendication 1, **caractérisé en ce qu'**une pièce formant languette en forme d'arc (9.1) est installée sur la lame de ressort (9), une extrémité de la pièce formant languette en forme d'arc (9.1) est reliée à l'extrémité en porte-à-faux de la lame de ressort (9), et l'autre extrémité de la pièce formant languette en forme d'arc est en appui dans une rainure de l'autre côté de l'étrier en U (7.1) de la première borne (7).

9. Dispositif de commande de température rempli de liquide d'un appareil de production de chaleur selon la revendication 8, **caractérisé en ce qu'**une vis de réglage de l'étrier (12) est installée sur la surface inférieure de l'étrier en U (7.1) de la première borne (7).
